(19) Europäisches Patentamt

European Patent Office

Office européen des brevets

(11) Veröffentlichungsnummer: **0 242 601 B1**

(12) **EUROPÄISCHE PATENTSCHRIFT**

(45) Veröffentlichungstag der Patentschrift: 29.05.91

(51) Int. Cl.⁵: **G11B 23/04**, G11B 5/41

(21) Anmeldenummer: 87104107.5

(22) Anmeldetag: 20.03.87

(54) Reinigungskassette.

(30) Priorität: 21.04.86 DE 8610911 U

(43) Veröffentlichungstag der Anmeldung:
28.10.87 Patentblatt 87/44

(45) Bekanntmachung des Hinweises auf die
Patenterteilung:
29.05.91 Patentblatt 91/22

(84) Benannte Vertragsstaaten:
DE FR GB IT SE

(56) Entgegenhaltungen:
US-A- 4 272 796

(73) Patentinhaber: Siemens Nixdorf Informationssysteme Aktiengesellschaft
Fürstenallee 7
W-4790 Paderborn(DE)

(72) Erfinder: Bogdanski, Michael
Schwarzrietweg 22
W-4796 Salzkotten(DE)

(74) Vertreter: Schaumburg, Thoenes & Englaender
Mauerkircherstrasse 31 Postfach 86 07 48
W-8000 München 86(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Reinigungskassette der im Oberbegriff des Anspruches 1 genannten Art.

Die elektromagnetischen Wandlerköpfe von Bandkassettengeräten, nämlich Schreib-, Lese- und Löschköpfe, müssen von Zeit zu Zeit gereinigt werden, da sich auf ihnen beim Betrieb des Bandkassettengerätes Verschmutzungen absetzen.

Durch die US-A-4,458,281 ist eine Reinigungskassette bekannt, bei welcher der Reinigungskopf eine drehende Rolle ist, die über ein in der Kassette angeordnetes Übertragungsgetriebe vom Geräteantrieb angetrieben wird. Die Achse der Reinigungsrolle steht etwa senkrecht auf der Hauptebene der Kassette. Dadurch ist die Wischrichtung entsprechend der Laufrichtung des Magnetbandes festgelegt, so daß z.B. die Gefahr besteht, daß quer zur Bandlaufrichtung verlaufende Spalten und Absätze in der zu reinigenden Fläche der Wandlerköpfe nicht ausreichend gereinigt werden. Außerdem ist es nachteilig, daß der Reinigungsrollenantrieb vom Laufwerk des Bandkassettengerätes durchgeführt wird. Im allgemeinen Betrieb des Bandkassettengerätes wird der Bandtransport unterbrochen, wenn das Magnetband ein nicht definiertes Signal übermittelt. Da die Reinigungsrolle keine Signalinformation trägt, ist im allgemeinen ein Betrieb des Laufwerkes und damit ein Antrieb der Reinigungsrolle nicht möglich. Es muß deshalb in solchen Fällen ein spezielles Reinigungsprogramm erstellt werden, was umständlich und teuer ist.

Es sind auch schon Reinigungskassetten bekannt, die einen schwingenden Reinigungskopf enthalten, welcher mit einer vom Laufwerk des Bandkassettengerätes unabhängigen Antriebseinrichtung verbunden ist. Der Prospekt "Order No. 13 354.00.3.93" der Firma Nixdorf Computer AG, Paderborn, zeigt eine Reinigungskassette mit einem Reinigungskopf, welcher schwingend gelagert ist derart, daß die dem Wandlerkopf zugewandte Arbeitsfläche sich quer zur Bandlaufrichtung bewegt. Der Reinigungskopf ist durch eine Feder in einer Bewegungsrichtung vorbelastet und kann durch einen mit dem Reinigungskopf verbundenen Betätigungshebel gegen die Kraft der Feder manuell bewegt werden.

Ein wesentlicher Nachteil dieser bekannten Reinigungskassette liegt darin, daß diese nur bei Bandkassettengeräten verwendet werden kann, bei denen die Reinigigungskassette und insbesondere der Betätigungshebel nach dem Einlegen in die Kassettenaufnahme des Gerätes zugänglich bleibt. Die bekannte Reinigungskassette ist deshalb z.B. bei allen Bandkassettengeräten, bei denen die Kassettenaufnahme nach dem Einlegen einer Kassette durch einen Deckel verschlossen wird, nicht verwendbar. Das gleiche gilt für Bandkassettengeräte, bei denen die Bandkassette in Längsrichtung eingeschoben wird. Ein weiterer Nachteil ist, daß der manuelle Reinigungsvorgang für die Bedienungsperson umständlich und mühsam ist und daß der Grad der Reinigung vom Eifer dieser Bedienungsperson abhängt.

Durch die US-A-4,272,796 ist bereits eine Reinigungskassette bekannt, bei der ein schwingend gelagerter Reinigungskopf über ein in dem Kassettengehäuse angeordnetes Übertragungsgetriebe mit dem Geräteantrieb verbindbar ist. Neben dem bereits beschriebenen Nachteil, der sich aus der Verwendung des Geräteantriebes ergibt, ist auch eine ungünstige, weil in Laufrichtung des Magnetbandes verlaufende Wischrichtung verwirklicht.

Es ist die Aufgabe der vorliegenden Erfindung eine Reinigungskassette der im Oberbegriff des Anspruches 1 beschriebenen Art so zu verbessern, daß diese unabhänig vom Geräteantrieb und von der Ausbildung der Kassettenaufnahme betrieben werden kann und daß ohne großen Konstruktionsaufwand eine günstige, auch quer zur Bandlaufrichtung stehende Spalte und Absätze berücksichtigende Wischrichtung verwirklicht werden kann.

Diese Aufgabe ist erfindungsgemäß durch die im Kennzeichen des Anspruches 1 enthaltenen Merkmale gelöst.

Die Antriebseinrichtung umfaßt einen speziell für die Betätigung des Reinigungskopfes vorgesehenen Antriebsmotor, der ebenfalls innerhalb des Kassettengehäuse angeordnet ist. Eine manuelle Betätigung des Reinigungskopfes und damit eine Zugänglichkeit der Reinigungskassette nach dem Einsetzen in die Kassettenaufnahme des Gerätes ist deshalb nicht mehr erforderlich. Dennoch ist der Reinigungsvorgang bei Verwendung der erfindungsgemäßen Reinigungskassette unabhängig vom Geräteantrieb, so daß spezielle Reinigungsprogramme nicht erforderlich sind.

In bevorzugter Ausgestaltung der Erfindung ist hier vorgesehen, daß als Antriebsmotor ein Elektromotor mit einer zum Kassettenboden parallelen drehenden Ausgangswelle verwendet wird. Derartige Antriebsmotoren sind als preisgünstige, marktübliche Bauelemente in vielfältiger Leistungsabstufung erhältlich und lassen sich wegen der gewählten Einbaulage auch in flachen Kassetten unterbringen.

Der Reinigungskopf ist erfindungsgemäß als Schwingkopf ausgebildet, welcher quer zur Bandlaufrichtung schwingt und über ein Übertragungsgetriebe mit dem Antriebsmotor gekoppelt ist. Das Übertragungsgetriebe verbindet die Ausgangswelle des Antriebsmotors mit dem Reinigungskopf und wandelt die Drehbewegung in eine Schwingbewegung um.

In einer Ausgestaltung der Erfindung ist beispielsweise vorgesehen, daß das Übertragungsgetriebe eine mit der Ausgangswelle des Antriebsmotors drehverbundene Nockenscheibe umfaßt, und daß das freie Ende eines mit dem Reinigungskopf verbundenen Übertragungshebels auf den Nockenflanken der Nockenscheibe aufliegt. Die für ein derartiges Übertragungsgetriebe erforderlichen Bauteile können sehr einfach und preiswert hergestellt und montiert werden.

In bevorzugter Ausgestaltung der Erfindung ist dabei vorgesehen, daß die Nockenscheibe eine senkrecht auf dem Gehäuseboden stehende Achse aufweist, daß die Nokken durch einen auf der vom Gehäuseboden abgewandten Stirnseite der Nokkenscheibe angeordneten Ringrand mit in Umfangsrichtung ansteigenden und abfallenden Nokkenflanken ausgebildet sind, daß mit dem Reinigungskopf ein bei seiner Mittelstellung zum Gehäuseboden etwa paralleler, auf den Nockenflanken aufliegender Übertragungshebel fest verbunden ist und daß am Reinigungskopf eine den Übertragungshebel in Auflagerichtung belastende Feder angreift. Die Feder hält den Übertragungshebel ständig in Anlage an den Nockenflanken.

Bei einer Drehung der Nockenscheibe folgt der Übertragungshebel dem Verlauf der Nockenflanken und treibt den Reinigungskopf zu einer Schwingbewegung an. Die Kopplung der Nockenscheibe mit dem Antriebsmotor erfolgt erfindungsgemäß über eine den Ringrand radial außen umgebende Stirnverzahnung, in die ein mit der Ausgangswelle des Antriebsmotors verbundenes Antriebsritzel eingreift.

Im Kassettengehäuse ist gemäß der Erfindung ein elektrischer Fühlerschalter angeordnet, dessen Fühler in den Weg eines an der Nockenscheibe ausgebildeten Schaltnockens ragt. Der Schalter wird durch den umlaufenden Schaltnocken betätigt und dient beispielsweise zum Abschalten des Antriebsmotors nach einer Umdrehung der Nockenscheibe.

In weiterer Ausgestaltung der Erfindung ist vorgesehen, daß im Kassettengehäuse eine mit der Nockenscheibe antriebsverbundene Reinigungsrolle mit einer ebenfalls senkrecht auf dem Gehäuseboden stehenden Drehachse angeordnet ist, die mit einem Teil ihres Umfanges über eine der Begrenzungswände übersteht. Diese Reinigungsrolle kann zum Reinigen weiterer Elemente des Laufwerkes des Bandkassettengerätes, vorzugsweise der Capstanrolle, dienen, wie noch genauer beschrieben wird.

In einem anderen Ausführungsbeispiel der Erfindung mit einem als schwenkbare Platte ausgebildeten Reinigungskopf ist vorgesehen, daß der Antriebsmotor eine zum Gehäuseboden etwa parallele, kurbelartig gekröpfte Ausgangswelle aufweist, die über eine senkrecht zum Gehäuseboden wirksame Mitnehmerverbindung mit dem Reinigungskopf verbunden ist. Eine besonders einfache Konstruktion ergibt sich dann, wenn die Ausgangswelle des Antriebsmotors etwa parallel zur Schwenkachse des Reinigungskopfes liegt, wenn ferner am Reinigungskopf ein senkrecht zur Schwenkachse und etwa parallel zur Ebene des plattenartigen Reinigungskopfes angeordneter Übertragungshebel befestigt ist, wobei das kurbelartig abgekröpfte Ende der Ausgangswelle in einen im Übertragungshebel ausgebildeten, zur Ausrichtung des Übertragungshebels parallelen Mitnehmerschlitz eingreift. Die senkrecht zum Kassettenboden liegende Komponente der Kreisbewegung des abgekröpften Endes wird auf den Übertragungshebel übertragen und von diesem an den Reinigungskopf weitergegeben. Zur Steuerung des Reinigungsvorganges ist gemäß der Erfindung im Kassettengehäuse ein Fühlerschalter angeordnet, dessen beweglicher Fühler in den Weg eines mit dem Reinigungskopf verbundenen Schaltnockens ragt. Dieser Schaltnokken ist vorzugsweise durch das freie Ende des Übertragungshebels gebildet. Eine Zählvorrichtung zählt die Anzahl der den Schwingungen des Übertragungshebels entsprechenden Schalterbetätigungen und schaltet den Antriebsmotor beispielsweise nach einer vorgegebenen Anzahl von Schwingungen ab, wie noch beschrieben wird.

Der Antriebsmotor kann beispielsweise über am Kassettengehäuse ausgebildete, nach außen führende Kontakte mit einer außerhalb des Kassettengehäuses, beispielsweise im Bandkassettengerät angeordneten Stromquelle verbunden werden. In einer bevorzugten Ausgestaltung der Erfindung ist jedoch im Kassettengehäuse eine mit Anschlußkontakten versehene Aufnahme für wenigstens eine elektrische Batterie ausgebildet, die als Energiequelle für den Antriebsmotor und gegebenenfalls der Zählvorrichtung dient. Auf diese Weise ist die Reinigungskassette vollkommen autonom.

Das Kassettengehäuse ist vorzugsweise durch Trennwände in unterschiedliche Fächer aufgeteilt, so daß beispielsweise der Reinigungskopf, die Antriebseinrichtung, Elemente zur Steuerung dieser Antriebseinrichtung oder die Batterien jeweils in gesonderten Fächern angeordnet werden können, wie noch genauer beschrieben wird.

Zum Aktivieren der Antriebseinrichtung ist gemäß der Erfindung in oder an wenigstens einer Außenwand des Kassettengehäuses ein elektrischer Schalter mit einem nach außen gerichteten Betätigungsorgan angeordnet, wobei das Betätigungsorgan beim Einsetzen der Reinigungskassette betätigt wird und die Stromzufuhr zum Antriebsmotor einschaltet. Das Abschalten des Antriebsmotors erfolgt in der schon beschriebenen Weise durch gesonderte Schalter, die durch beim Reinigungsvorgang bewegte Elemente der Antriebseinrichtung betätigt werden.

Die dem Wandlerkopf zugewandte Arbeitsfläche des Reinigungskopfes weist in an sich bekannter Weise eine Aufnahme zur Befestigung einer Streifenauflage aus einem etwa schwamm-oder tuchartigen Material auf. Dieses kann vor dem Einsetzen der Reinigungskassette in das Bandkassettengerät mit einer Reinigungsflüssigkeit getränkt werden. Gemäß der Erfindung ist vorgesehen, daß auch die zum Reinigen der Capstanrolle oder anderer Elemente des Gerätelaufwerkes vorgesehene Reinigungsrolle mit einer Ringauflage aus einem etwa schwamm- oder tuchartigen Material versehen werden kann. Zur Aufnahme der Streifen- bzw. Ringauflagen ist erfindungsgemäß in dem Kassettengehäuse ein gesondertes Fach ausgebildet. Da erfahrungsgemäß der Wandlerkopf häufiger gereinigt werden muß, als die anderen Elemente des Gerätelaufwerkes, ist dieses Fach so ausgebildet, daß es im Verhältnis des Verbrauches je eine Ringauflage und mehrere Streifenauflagen aufnehmen kann.

Mehrere Ausführungsbeispiele der Erfindung sind in der Zeichnung dargestellt und im folgenden näher beschrieben. Es zeigen:

    Fig. 1      eine Reinigungskassette mit einem über eine Nockenscheibe schwingend angetriebenen Reinigungskopf;

    Fig. 2      eine Reinigungskassette mit einem über einen Kurbelantrieb schwingend angetriebenen Reinigungskopf.

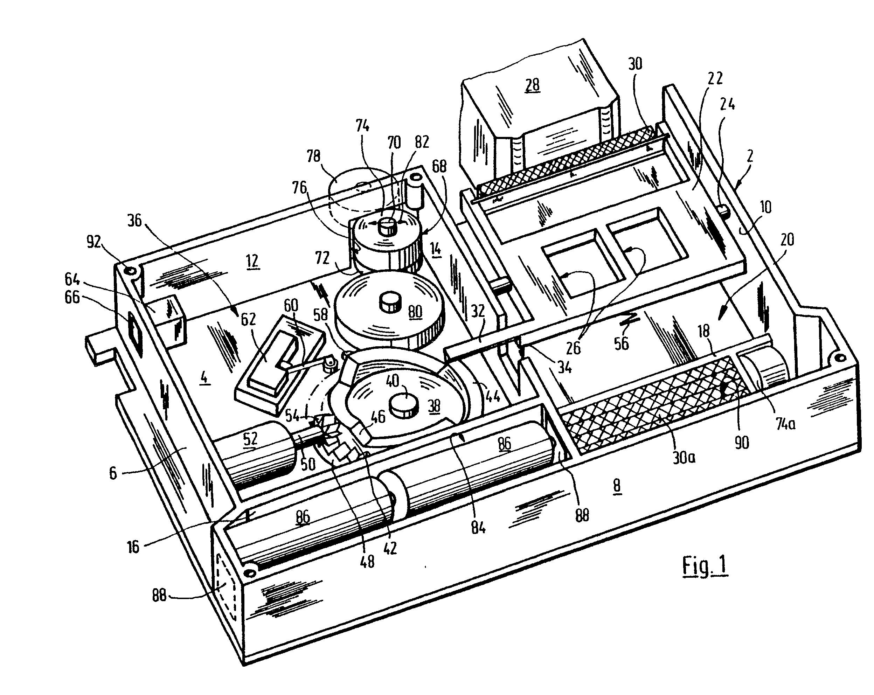

Fig. 1 zeigt ein Kassettengehäuse 2 mit den Außenabmessungen einer genormten Bandkassette. Auf dem Kassettenboden 4 sind senkrecht stehende Begrenzungswände 6, 8, 10, 12 und Trennwände 14, 16, 18 angeordnet. Durch diese Trennwände 14, 16, 18 werden in der Kassette verschiedene Fächer voneinander abgetrennt.

In einem ersten Fach 20 ist ein Reinigungskopf 22 untergebracht. Dieser ist als in einer Mittelstellung etwa parallel zum Gehäuseboden 4 angeordnete, um eine parallel zum Gehäuseboden 4 liegende Schwenkachse 24 schwenkbare Platte ausgebildet. Diese Schwenkachse 24 ist einerseits in der Begrenzungswand 10, andererseits in der Trennwand 14 gelagert. Der Reinigungskopf 22 ist mit Erleichterungsaussparungen 26 versehen. An seiner dem elektromagnetischen Wandlerkopf 28 zugewandten Seite weist der Reinigungskopf 22 in an sich bekannter Weise eine Aufnahme für eine etwa schwamm-oder tuchartige Streifenauflage 30 auf. Diese Streifenauflage kann beispielsweise eine vliesartige Struktur haben. Vor dem Reinigungsvorgang kann sie mit einer speziellen Reinigungsflüssigkeit getränkt werden.

An dem dem Wandlerkopf 28 abgewandten Ende des Reinigungskopfes 22 ist ein Übertragungshebel 32 angeordnet. Dieser ragt durch eine in der Trennwand 14 ausgebildete Ausnehmung 34 hindurch in ein zweites Fach 36 hinein.

In dem zweiten Fach 36 ist eine Nockenscheibe 38 mit einer senkrecht auf dem Gehäuseboden 4 stehenden Achse 40 drehbar angeordnet. Auf der vom Gehäuseboden abgewandten Stirnseite der Nockenscheibe 38 ist ein Ringrand 42 in Umfangsrichtung ansteigenden Nockenflanken 44 bzw. abfallenden Nockenflanken 46 ausgebildet. Der Ringrand 42 ist radial außen von einer Stirnverzahnung 48 umgeben, in die ein mit der Ausgangswelle 50 eines Antriebsmotors 52 verbundenes Antriebsritzel 54 eingreift. Der Übertragungshebel 32 liegt auf den Nockenflanken 44, 46 des Ringrandes 42 auf und wird durch eine Feder 56 ständig in Anlage an den Nockenflanken 44, 46 gehalten.

Am Außenumfang der Nockenscheibe 38 ist ein Schaltnocken 58 ausgebildet, welcher den Fühler 60 eines Schalters 62 betätigt.

In der Begrenzungswand 6 ist ein elektrischer Schalter 64 mit einem nach außen gerichteten Betätigungsorgan 66 angeordnet. Ein weiterer Schalter kann in der Begrenzungswand 8 angeordnet sein, wie nicht näher dargestellt ist.

Beim Einsetzen der Reinigungskassette 2 in die Kassettenaufnahme eines Bandkassettengerätes betätigt der Benutzer oder z. B. eine Gegenfläche der Kassettenaufnahme den Schalter 64. Dadurch wir dem Antriebsmotor 52 Strom zugeführt, so daß dieser über das Antriebsritzel 54 die Nockenscheibe 38 antreibt.

Der auf den Nockenflanken 44, 46 aufliegende Übertragungshebel 32 bewegt sich auf und ab und verursacht eine Schwingbewegung des Reinigungskopfes 22 um die Schwenkachse 24. Nach einer Umdrehung der Nockenscheibe 38 wird der Fühler 60 des Schalters 62 durch den Schaltnocken 58 betätigt, wodurch die Stromzufuhr zum Antriebsmotor 52 abgeschaltet wird. Der Schaltnocken 58 ist so angeordnet, daß die Nockenscheibe 38 in einer Stellung zum Stehen kommt, bei der der Übertragungshebel 32 etwa eine Mittelstellung einnimmt, so daß das dem Wandlerkopf 28 zugewandte Ende des Reinigungskopfes 22 mit der Streifenauflage 30 ebenfalls etwa seine Mittellage einnimmt. Auf diese Weise wird vermieden, daß beim Einsetzen der Reinigungskassette 2 in die Kassettenaufnahme des Bandkassettengerätes durch am Boden oder der Oberseite der Kassettenaufnahme befindlichen Schmutz die Streifenauflage 30 verschmutzt wird.

Im Kassettengehäuse 2 ist eine Reinigungsrolle 68 mit einer senkrecht auf dem Gehäuseboden 4 stehenden Drehachse 70 angeordnet. Die Reinigungsrolle 68 umfaßt eine Rollennabe 72, auf die eine Ringauflage 74 aus einem etwa schwamm-oder tuchartigen Material aufsetzbar ist. Die Reinigungsrolle 68 ragt mit einem Teil ihres Umfanges durch eine in der Begrenzungswand 12 ausgebildete Öffnung 76 über diese Begrenzungswand 12 hinaus und dient beispielsweise zum Reinigen ei-ner im Bandkassettengerät angeordneten Capstan-rolle 78. Die Rollennabe 72 ist reibschlüssig mit einer Zwischenrolle 80 verbunden, die ihrerseits reibschlüssig an einer äußeren Zylinderfläche der Nockenscheibe 38 anliegt.

Wie Fig. 1 erkennen läßt, kann die Achse 70 zumindest in einem kleinen Bereich in Richtung des Pfeiles 82, d.h. etwa tangential zum Umfang der Zwischenrolle 80, verschiebbar angeordnet und in nicht näher dargestellter Weise mit einem Schalter verbunden sein. Beim Einlegen des Kassettengehäuses 2 in die Kassettenaufnahme wird durch Anlage der Reinigungsrolle 68 an der Capstanrolle 78 die Achse 70 verschoben und der mit dieser verbundene Schalter betätigt, so daß der Antriebsmotor 52 aktiviert wird. In diesem Falle können die Schalter 64 entfallen.

Das Kassettengehäuse 2 weist neben den Fächern 20 und 36 ein drittes Fach 84 zur Aufnahme von Batterien 86 auf. In dem Fach 84 sind Anschlußkontakte 88 vorgesehen, die mit der die vorerwähnten Schalter enthaltenden Schaltanordnung und dem Antriebsmotor 52 verbunden sind.

Ferner sind im Kassettengehäuse 2 je ein Fach 90 zur Aufnahme mehrerer Ersatz-Streifenauflagen 30a sowie einer Ersatz-Ringauflage 74a ausgebildet. Die Erfahrung hat gezeigt, daß im gleichen Zeitraum, in welchem eine Ringauflage 74 verbraucht wird, etwa fünf Streifenauflagen 30 verbraucht werden. Die Fächer zur Aufnahme der Ersatz-Streifenauflagen und der Ersatz-Ringauflage sind deshalb etwa im oben genannten Verhältnis bemessen. Andere Bemessungen sind möglich.

Das Kassettengehäuse 2 kann in bekannter Weise durch einen nicht dargestellten Kassettendeckel verschlossen werden, welcher mittels in Gewindebohrungen 92 einschraubbare Schrauben am Kassettengehäuse 2 befestigt wird.

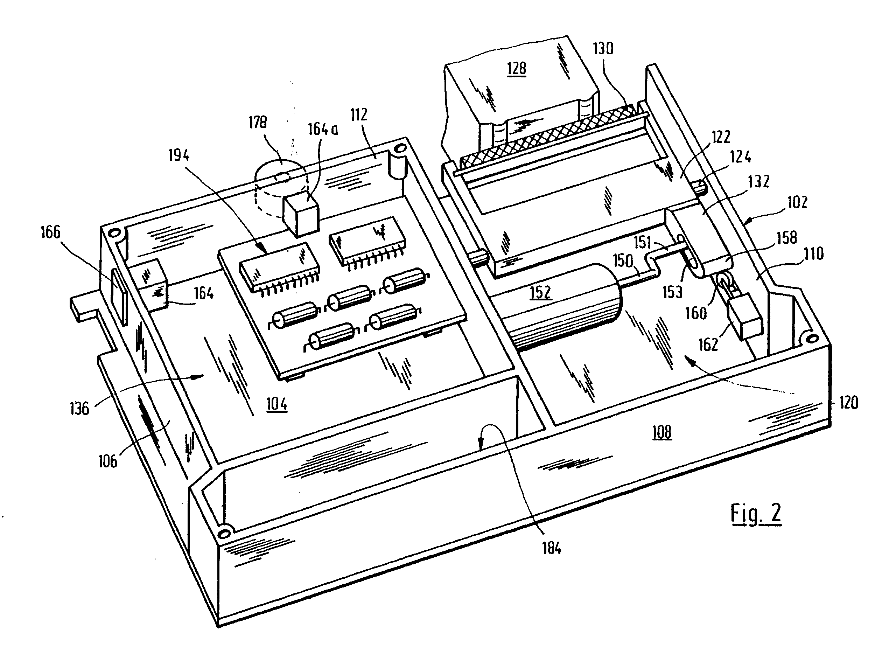

Fig. 2 zeigt ein Kassettengehäuse 102 etwa der in Fig. 1 dargestellten Art; durch auf dem Gehäuseboden 104 senkrecht stehende Begrenzungswände 106, 108, 110, 112 werden mehrere Fächer 120, 136, 184 gebildet.

Im ersten Fach 120 ist ein um eine Schwenkachse 124 schwenkbar gelagerter Reinigungskopf 122 angeordnet, welcher eine Streifenauflage 130 zur Reinigung eines elektromagnetischen Wandlerkopfes 128 trägt. Ein Antriebsmotor 152 ist ebenfalls im ersten Fach 120 angeordnet. Er weist eine zum Gehäuseboden 104 etwa parallele Ausgangswelle 150 auf, die etwa kurbelartig gekröpft ist. An der dem Wandlerkopf 128 abgewandten Seite des Reinigungskopfes 122 ist ein Übertragungshebel 132 angeordnet, welcher etwa senkrecht zur Schwenkachse 124 steht. Das freie Ende 151 der gekröpften Ausgangswelle 150 greift in einen im Übertragungshebel 132 ausgebildeten Längsschlitz 153 ein. Wenn der Antriebsmotor 152 aktiviert wird und die Ausgangswelle 150 sich dreht, treibt sie den Reinigungskopf 122 zu einer Schwingbewegung an.

Ebenfalls im ersten Fach 120 ist ein Fühlerschalter 162 angeordnet, dessen beweglicher Fühler 160 mit dem als Schaltnocken 158 ausgebildeten freien Ende des Übertragungshebels 132 zusammenwirkt. Bei jedem Schwingungsdurchgang wird der Fühler 160 betätigt, so daß dieser einen Zählimpuls erzeugt. Diese Zählimpulse werden einer im zweiten Fach 136 angeordneten Steuerschaltung 194 zugeführt, die nach einer vorgege-nen Anzahl von Bewegungen des Reinigungskopfes 122 die Stromzufuhr zum Antriebsmotor 152 unterbricht. Die Steuerschaltung 194 kann auch ein Zeitmeßglied enthalten, welches die Aktivierung des Antriebsmotors für eine bestimmte, vorgegebene Zeitdauer aufrechterhält. Außerdem kann die Steuerschaltung 194 eine akustische Signaleinrichtung enthalten, die der Bedienungsperson mitteilt, daß der Reinigungsvorgang beendet ist.

In der Begrenzungswand 106 ist ein Schalter 164 mit einem nach außen gerichteten Schaltorgan 166 angeordnet. Das Schaltorgan 166 wird, wie bereits bei Fig. 1 beschrieben, z. B. vor dem Einschieben der Reinigungskassette in die Kassettenaufnahme vom Benutzer betätigt und aktiviert dabei den Antriebsmotor 152. Derartige Schalter können in beliebiger Zahl an beliebigen, geeigneten Stellen der Begrenzungswände oder auch des Kassettenbodens 104 angeordnet sein. In einer bevorzugten Ausgestaltung ist ein weiterer mit einem nicht dargestellten Fühler ausgestatteter Schalter 164a an der Stelle der Begrenzungswand 112 angeordnet, die einer im Bandkassettengerät angeordneten Capstanrolle 178 gegenüberliegt.

Die gegenseitige Anordnung der Capstanrolle 78 bzw. 178 und des Wandlerkopfes 28 bzw. 128 ist bei fast allen gebräuchlichen Bandkassettengeräten eines bestimmten Kassettentyps genormt, so daß die Capstanrolle 78 bzw. 178 zur Betätigung des mit der Achse 70 der Reinigungsrolle 68 verbundenen Schalters bzw. des Schalters 164a und damit zur Aktivierung des Antriebsmotors 52 bzw. 152 dienen kann.

Die Antriebsmotoren 52, 152 sind vorzugsweise Getriebemotoren mit einer verhältnismäßig kleinen Ausgangsdrehzahl. Die Steuerschaltung 194 ist so ausgebildet, daß der Antriebsmotor 152 nach Beendigung des Reinigungsvorganges in Abhängigkeit von der Betätigung des Fühlerschalters 122 so stillgesetzt wird, daß das die Streifenauflage 130 tragende Ende des Reinigungskopfes 122 seine Mittelstellung einnimmt, um eine Verschmutzung der Streifenauflage 130 beim Einlegen des Kassettengehäuses 102 in die Kassettenaufnahme des Bandkassettengerätes zu vermeiden, wie bei Fig. 1 schon beschrieben wurde.

**Ansprüche**

1. Reinigungskassette für die Reinigung des elektromagnetischen Wandlerkopfes eines Bandkassettengerätes, umfassend ein in die Kassettenaufnahme des Gerätes einsetzbares Kassettengehäuse mit einem im Kassettengehäuse schwingend gelagerten Reinigungskopf sowie einem zwischen dem schwingenden Reinigungskopf und einem drehenden Antrieb angeordneten Übertragungsgetriebe, dadurch **gekennzeichnet,**
   - daß der Reinigungskopf (22, 122) als um eine im wesentlichen parallel zum Kassettenboden (4, 104) angeordnete Schwenkachse (24, 124) schwenkbar gelagerte Platte ausgebildet ist,
   - daß der Antrieb als innerhalb des Kassettengehäuses (2, 102) angeordneter Motor (52, 152) mit einer im wesentlichen parallel zum Kassettenboden (4, 104) liegenden drehenden Ausgangswelle (50, 150) ausgebildet ist,
   - und daß zwischen dem Motor (52, 152) und einem im wesentlichen senkrecht zum Kassettenboden (4, 104) schwingenden Teil (32, 132) des Reinigungskopfes (22, 122) ein Übertragungsgetriebe zum Umwandeln der Drehbewegung des Motors in eine Schwingbewegung angeordnet ist.

2. Reinigungskassette nach Anspruch 1, dadurch **gekennzeichnet,** daß der Antriebsmotor (52, 152) ein Elektromotor ist.

3. Reinigungskassette nach Anspruch 1 oder 2, dadurch **gekennzeichnet,** daß das Übertragungsgetriebe eine mit der Ausgangswelle (50) des Antriebsmotors (52) drehverbundene Nockenscheibe (38) umfaßt und daß das freie Ende eines mit dem Reinigungskopf (22) verbundenen Übertragungshebels (32) auf den Nockenflanken (44, 46) der Nockenscheibe (38) aufliegt.

4. Reinigungskassette nach Anspruch 3, dadurch **gekennzeichnet,** daß die Nockenscheibe (38) eine senkrecht auf dem Gehäuseboden (4) stehenden Achse (40) aufweist, daß die Nocken durch einen auf der Nockenscheibe (38) angeordneten Ringrand (42) mit in Umfangsrichtung ansteigenden und abfallenden Nockenflanken (44, 46) ausgebildet ist, daß mit dem Reinigungskopf (22) ein in dessen Mittelstellung zum Gehäuseboden (4) im wesentlichen paralleler, auf den Nockenflanken aufliegender Übertragungshebel (32) fest verbunden ist und daß am Reinigungskopf (22) eine den Übertragungshebel in Auflagerichtung belastende Feder (56) angreift.

5. Reinigungskassette nach Anspruch 4, dadurch **gekennzeichnet,** daß die Nockenscheibe (38) eine den Ringrand (42) radial außen umgebende Stirnverzahnung (48) aufweist, in die ein mit der Ausgangswelle (50) des Antriebsmotors (52) verbundenes Antriebsritzel (54) eingreift.

6. Reinigungskassette nach einem der Ansprüche 3 und 4, dadurch **gekennzeichnet** daß im Kassettengehäuse (2) ein elektrischer Fühlerschalter (62) angeordnet ist, dessen Fühler (60) in den weg eines an der Nockenscheibe (38) ausgebildeten Schaltnockens (58) ragt, wobei der Schaltnocken (58) vorzugsweise am Außenumfang der Nockenscheibe (38) angeordnet ist und der Fühlerschalter (62) neben der Nockenscheibe (38) auf dem Gehäuseboden (4) befestigt sowie der Fühler (60) parallel zum Gehäuseboden (4) beweglich ist.

7. Reinigungskassette nach einem der Ansprüche 3 bis 6, dadurch **gekennzeichnet,** daß im Kassettengehäuse (2) eine mit der Nockenscheibe (38) antriebsverbundene Reinigungsrolle (68) mit einer senkrecht auf dem Gehäuseboden (4) stehenden Drehachse (70) angeordnet ist, wobei die Reinigungsrolle (68) mit einem Teil ihres Umfanges über eine der Begrenzungswände übersteht.

8. Reinigungskassette nach Anspruch 7, dadurch **gekennzeichnet,** daß die Reinigungsrolle (68) mit einer Zwischenrolle (80) und diese ihrerseits mit der Nockenscheibe (38) antriebsverbunden ist.

9. Reinigungskassette nach Anspruch 4, dadurch **gekennzeichnet,** daß das Übertragungsgetriebe eine zum Gehäuseboden (104) etwa parallele, kurbelartig gekröpfte drehende Ausgangswelle (150) des Antriebsmotors (152) umfaßt, die über eine senkrecht zum Gehäuseboden (104) wirksame Mitnehmerverbindung mit dem Reinigungskopf (122) verbunden ist.

10. Reinigungskassette nach Anspruch 9, dadurch **gekennzeichnet,** daß die Ausgangswelle (150) des Antriebsmotors (152) etwa parallel zur Schwenkachse (124) des Reinigungskopfes (122) liegt, daß am Reinigungskopf (122) ein senkrecht zur Schwenkachse (124) und bei Mittelstellung des Reinigungskopfes (122) etwa parallel zur Plattenebene angeordneter Übertragungshebel (132) fest angeordnet ist und daß das kurbelartig abgekröpfte Ende (151) der Ausgangswelle (150) in einen im Übertragungshebel (132) ausgebildeten, zur Ausrichtung des Übertragungshebels parallelen Mitnehmerschlitz (153) eingreift.

11. Reinigungskassette nach Anspruch 9 oder 10, dadurch **gekennzeichnet,** daß im Kassettengehäuse (102) ein Fühlerschalter (162) angeordnet ist, dessen beweglicher Fühler (160) in den Weg eines mit dem Reinigungskopf (122) verbundenen Schaltnokkens (158) ragt, und daß der Schaltnocken (158) vorzugsweise durch das freie Ende des Übertragungshebels (132) gebildet ist.

12. Reinigungskassette nach einem der Ansprüche 1 bis 11, dadurch **gekennzeichnet,** daß im Kassettengehäuse (102) eine mit Anschlußkontakten (88) versehene Aufnahme für wenigstens eine elektrische Batterie (86) ausgebildet ist.

13. Reinigungskassette nach einem der Ansprüche 1 bis 12, dadurch **gekennzeichnet,** daß im Kassettengehäuse mehrere durch Trennwände voneinander abgetrennte Fächer vorgesehen sind, wobei der Reinigungskopf (22) in einem ersten Fach angeordnet und die Antriebseinrichtung in einem gesonderten, an das erste Fach (20) angrenzenden zweiten Fach (36) angeordnet ist, und daß in einer das erste Fach (20) vom zweiten Fach (36) abgrenzenden Trennwand (14) eine Ausnehmung (34) ausgebildet ist, durch welche der Übertragungshebel (32) hindurchragt.

14. Reinigungskassette nach Anspruch 12, dadurch **gekennzeichnet,** daß die Antriebseinrichtung (152, 150, 151, 132) in einem ersten Fach (120) angeordnet und in einem anderen Fach (136) eine elektronische Steuerungseinrichtung (194) enthalten ist und daß die Aufnahme für Batterien (86) vorzugsweise als gesondertes Batteriefach (84, 184) ausgebildet ist.

15. Reinigungskassette nach einem der Ansprüche 1 bis 14, dadurch **gekennzeichnet,** daß in oder an wenigstens einer Außenwand (6, 8, 106, 108, 112) des Kassettengehäuses (2, 102) ein elektrischer Schalter (64, 164, 164a) mit einem nach außen gerichteten Betätigungsorgan (66, 166) angeordnet ist und/oder, daß bezüglich der Bandlaufrichtung des Bandkassettengerätes vor und/oder hinter dem Reinigungskopf (122) ein Schalter (164a) angeordnet ist und/oder, daß die Reinigungsrolle (68) auf einer etwa parallel zum Gehäuseboden (4) beweglich gelagerten, mit dem Schaltorgan eines im Kassettengehäuse (2) angeordneten elektrischen Schalters verbundenen Achse (70) angeordnet ist.

16. Reinigungskassette nach einem der Ansprüche 7 bis 15, dadurch **gekennzeichnet,** daß die Reinigungsrolle (68) eine Rollennabe (72) und eine darauf aufsetzbare Ringauflage (74) aus einem etwa schwammoder tuchartigen Material umfaßt.

17. Reinigungskassette nach Anspruch 16, wobei die dem Wandlerkopf zugewandte Arbeitsfläche des Reinigungskopfes eine Aufnahme zur Befestigung einer Streifenauflage aus einem etwa schwamm- oder tuchartigen Material aufweist, dadurch gekennzeichnet, daß in dem Kassettengehäuse (2) ein gesondertes Fach zur Aufnahme wenigstens je einer Streifenauflage (30a) und einer Ringauflage (74a) ausgebildet ist, wobei das gesonderte Fach vorzugsweise zur Aufnahme wenigstens einer Ringauflage (74a) und einer ganzzahlig vielfachen Anzahl von Streifenauflagen (30a) ausgebildet ist.

18. Reinigungskassette nach einem der Ansprüche 6 bis 16, dadurch **gekennzeichnet,** daß der Fühlerschalter (62, 162) derart angeordnet ist oder ausgelegt ist, daß der Antriebsmotor (52, 152) nach dem Betätigen des Fühlerschalters (62, 162) in einer Stellung zum Stehen kommt, bei der der Reinigungskopf (22, 122) eine mittlere Lage einnimmt.

**Claims**

1. Cleaning cassette for the cleaning of the electro-magnetic transducer head of a tape cassette device, comprising a cassette housing being insertable in the cassette receptacle of the device, having a cleaning head mounted in the cassette housing, being adapted for an oscillating movement, as well as a transmission gear being arranged between the oscillating cleaning head and a rotating drive, **characterized in**

   - that the cleaning head (22, 122) is designed as a plate being arranged so as to pivot around a pivotable axis (24, 124) being arranged substantially parallel to the cassette floor (4, 104),

- that the drive is designed as a motor (52, 152) being arranged in the interior of the cassette housing (2, 102) and having an output shaft (50, 150) extending substantially in parallel to the cassette floor (4, 104),

- and that a transmission gear for the conversion of the rotatry motion of the motor into an oscillating motion is arranged between the motor (52, 152) and an oscillating portion (32, 132) of the cleaning head (22, 122) oscillating substantially perpendicular to the cassette floor (4, 104).

2. Cleaning cassette according to claim 1, **characterized** in that the drive motor (52, 152) is an electric motor.

3. Cleaning cassette according to claim 1 or 2, **characterized** in that the transmission gear has a cam disk (38) being rotationally connected to the output shaft (50) of the drive motor (52) and that the free end of a transmission lever (32) connected to the cleaning head (22) rests on the cam flanks (44, 46) of the cam disk (38).

4. Cleaning cassette according to claim 3, **characterized** in that the cam disk (38) has an axis (40) being perpendicular to the housing floor (4), that the cams are formed by an annular rim (42) being arranged on the cam disk (38) and having cam flanks (44, 46) ascending and decending in circumferential direction, that with the cleaning head (22), a transmission lever (32) is fixedly connected which in its center position is substantially parallel to the housing floor (4) and resting on the cam flanks, and that a spring (56) engages the cleaning head (22) biasing the transmission lever in a direction so as to rest on the cam flanks.

5. Cleaning cassette according to claim 4, **characterized** in that the cam disk (38) has a ring serration (48) on the radial outer side surrounding the annular rim (42), wherein a drive pinion (54) connected to the output shaft (50) of the drive motor (52) engages with said ring serration.

6. Cleaning cassette according to any one of claims 3 and 4, **characterized** in that in the cassette housing (2) an electric sensor switch (62) is arranged, the sensor (60) of which extends in the path of a prominence (58) being formed at the cam disk (38), wherein the prominence (58) is preferably arranged at the outer circumferential surface of the cam disk (38), the sensor switch (62) is fixed adjacent the cam disk (38) on the housing floor (4) and that the sensor (60) is movable in parallel to the housing floor (4).

7. Cleaning cassette according to any one of claims 3 to 6, **characterized** in that in the cassette housing (2) a cleaning roller (68) being drivingly connected to the cam disk (38) and having a rotating axis (70) being perpendicular to the housing floor (4) is arranged, wherein the cleaning roller (68) with one portion of its periphery projects beyond one of the outside walls.

8. Cleaning cassette according to claim 7, **characterized** in that the cleaning roller (68) is drivingly connected to an intermediate roller (80) being itself drivingly connected to the cam disk (38).

9. Cleaning cassette according to claim 4, **characterized** in that the transmission gear comprises a cranked, rotating output shaft (150) of the drive motor (152), which is arranged generally in parallel to the housing floor (104), said output shaft (150) being connected to the cleaning head (122) by means of a drive mechanism being effective perpendicularly to the housing floor (104).

10. Cleaning cassette according to claim 9, **characterized** in that the output shaft (150) of the drive motor (152) is arranged substantially in parallel to the pivoting axis (124) of the cleaning head (122), that at the cleaning head (122) a transmission lever (132) is fixedly arranged which is perpendicular to the pivoting axis (124) and in the center position of the cleaning head (122) substantially in parallel to the plate plane, and that the cranked end (151) of the output shaft (150) engages into a driving slot (153) being formed in the transmission lever (132) and parallel to the extension of the transmission lever.

11. Cleaning cassette according to claim 9 or 10, **characterized** in that in the cassette housing (102) a sensor switch (162) is arranged, the movable sensor (160) of which protrudes into the path of a control cam (158) being connected to the cleaning head (122), and that the control cam (158) is preferably defined by the free end of the transmission lever (132).

12. Cleaning cassette according to any one of claims 1 to 11, **characterized** in that in the cassette housing (102) a receptacle for at least one electrical battery (86) is formed, the receptacle being provided with contact terminals (88).

13. Cleaning cassette according to any one of claims 1 to 12, **characterized** in that in the cassette housing several compartments are provided which are seperated from each other by partition walls, wherein the cleaning head (22) is arranged in a first compartment and the drive system is arranged in a separate second compartment (36) being adjacent to the first compartment (20), and that in a partition wall (14) separating the first compartment (20) from the second compartment (36) a recess (34) is provided, the transmission lever (32) projecting therethrough.

14. Cleaning cassette according to claim 12, **characterized** in that the drive system (152, 150, 151, 132) is arranged in a first compartment (120) and in a further compartment (136) there is an electronic control device (194), and that the receptacle for batteries (86) is preferably designed as a separate battery compartment (84, 184).

15. Cleaning cassette according to any one of claims 1 to 14, **characterized** in that in or at at least one outside wall (6, 8, 106, 108, 112) of the cassette housing (2, 102) an electric switch (64, 164, 164a) with an actuating element (66, 166) being directed towards the outside is arranged and/or that with reference to the tape feed direction of the tape cassette device, a switch (164a) is arranged ahead of and/or after the cleaning head (122) and/or that the cleaning roller (68) is arranged on an axis (70) being movably supported substantially in parallel to the housing floor (4) and being connected to the switch element of an electric switch being provided in the cassette housing (2).

16. Cleaning cassette according to any one of claims 7 to 15, **characterized** in that the cleaning roller (68) has a roller hub (72) and an annular layer 74) adapted to be mounted thereupon and consisting of an approximatelly sponge-like or cloth-like material.

17. Cleaning cassette according to claim 16, wherein the effective surface of the cleaning head facing the transducer head has a receptacle for the fixation of a strip layer made of an approximately sponge-like or cloth-like material, **characterized** in that in the cassette housing (2) a separate compartment for the reception of at least one strip layer (30a), and one annular layer (74a), respectively, is formed wherein the separate compartment is preferably designed for the reception of at least one annular layer (74a) and an integral multiple number of strip layers (30a).

18. Cleaning cassette according to any one of claims 6 to 16, **characterized** in that the sensor switch (62, 162) is arranged or designed such that the drive motor (52, 152) after actuation of the sensor switch (62, 162) comes to a stop in a position in which the cleaning head (22, 122) is in a center position.

## Revendications

1. Cassette de nettoyage pour nettoyer la tête de convertisseur électromagnétique d'un appareil à cassette de bande magnétique, comprenant un boîtier de cassette pouvant être introduit dans le logement de cassette de l'appareil, avec une tête de nettoyage montée de manière oscillante dans le boîtier de cassette ainsi qu'un mécanisme de transmission disposé entre la tête de nettoyage oscillante et un entraînement rotatif, **caractérisée en ce** que la tête de nettoyage (22, 122) est réalisée sous la forme d'une plaque montée de façon à pouvoir pivoter autour d'un axe de pivotement (24, 124) orienté sensiblement parallèlement au fond (4, 104) de la cassette; que l'entraînement est réalisé sous la forme d'un moteur (52, 152) disposé à l'intérieur du boîtier de cassette (2, 102) et présentant un arbre de sortie tournant (50, 150) orienté sensiblement parallèlement au fond (4, 104) de la cassette; et qu'un mécanisme de transmission pour la transformation du mouvement de rotation du moteur en un mouvement pendulaire est disposé entre le moteur (52, 152) et un élément (32, 132) de la tête de nettoyage (22, 122) oscillant sensiblement perpendiculairement au fond (4, 104) de la cassette.

2. Cassette de nettoyage selon la revendication 1, caractérisée en ce que le moteur d'entraînement (52, 152) est un moteur électrique.

3. Cassette de nettoyage selon l'une des revendications 1 ou 2, caractérisée en ce que le mécanisme de transmission comprend un disque à cames (38) solidaire en rotation avec l'arbre de sortie (50) du moteur d' entraînement (52); et que l'extrémité libre d'un levier de transmission (32) relié à la tête de nettoyage (22) repose sur les flancs de cames (44, 46) du disque à cames (38).

4. Cassette de nettoyage selon la revendication 3, caractérisée en ce que le disque à cames (38) comprend un axe (40) placé verticalement sur le fond (4) du boîtier; que les cames sont constituées par un rebord annulaire (42) disposé sur le disque à cames (38) et présentant des flancs de cames (44, 46) montant et descendant dans le sens circonférentiel; qu'un levier de transmission (32) est solidaire de la tête de nettoyage (22) , qui, dans la position médiane de ladite tête de nettoyage, est orienté sensiblement parallèlement au fond (4) du boîtier et repose sur les flancs de cames; et qu'un ressort (56) sollicitant le levier de transmission dans la direction d'appui est fixé sur la tête de nettoyage (22).

5. Cassette de nettoyage selon la revendication 4, caractérisée en ce que le disque à cames (38) comprend une denture droite (48) entourant le rebord annulaire (42) radialement à l'extérieur et coopérant avec un pignon d'attaque (54) couplé avec l'arbre de sortie (50) du moteur d'entraînement (52).

6. Cassette de nettoyage selon l'une des revendications 3 et 4, caractérisée en ce que dans le boîtier de cassette (2) est disposé un commutateur-palpeur (62) dont le palpeur (60) dépasse dans le chemin d'une came de contacteur (58) conformée sur le disque à cames (38) , la came de contacteur (58) étant disposée de préférence sur la périphérie extérieure du disque à cames (38), le commutateur-palpeur (62) étant fixé à côté du disque à cames (38) sur le fond (4) de la cassette et le palpeur (60) étant déplaçable parallèlement au fond (4) de la cassette.

7. Cassette de nettoyage selon l'une des revendications 3 à 6, caractérisée en ce que dans le boîtier de cas-sette (2) est disposé un galet de nettoyage (68) présentant une liaison d'entraînement avec le disque à cames (38) et un axe de rotation (70) placé verticalement sur le fond (4) du boîtier, le galet de nettoyage (68) dépassant avec une partie de sa périphérie de l'une des parois de délimitation.

8. Cassette de nettoyage selon la revendication 7, caractérisée en ce que le galet de nettoyage (68) est en liaison d'entraînement avec un galet intermédiaire (80) lequel est à son tour en liaison d'entraînement avec le disque à cames (38).

9. Cassette de nettoyage selon la revendication 4, caractérisée en ce que le mécanisme de transmission comprend un arbre de sortie tournant (150) du moteur d'entraînement (152) orienté sensiblement parallèlement par rapport au fond (104) du boîtier et coudé en forme de manivelle, lequel arbre de sortie est relié à la tête de nettoyage (122) par l'intermédiaire d'une connexion à entraînement agissant perpendiculairement au fond (104) du boîtier.

10. Cassette de nettoyage selon la revendication 9, caractérisée en ce que l'arbre de sortie (150) du moteur d'en-traînement (152) se situe sensiblement parallèlement à l'axe de pivotement (124) de la tête de nettoyage (122); qu'un levier de transmission (132) disposé perpendiculairement à l'axe de pivotement (124) et orienté, dans la position médiane de la tête de nettoyage (122), sensiblement parallèlement par rapport au plan de la plaque est solidarisé avec la tête de nettoyage (122); et que l'extrémité (151) de l'arbre de sortie (150), coudée en manivelle, s'engage dans une fente d'entraînement (153) conformée dans le levier de transmission (132) et placée parallèlement à l'extension du levier de transmission.

11. Cassette de nettoyage selon l'une des revendications 9 ou 10, caractérisée en ce que dans le boîtier de cassette (102) est monté un commutateur-palpeur (162) dont le palpeur mobile (160) dépasse dans le chemin d'une came de contacteur (158) solidaire de la tête de nettoyage (122); et que la came de contacteur (158) est constituée, de préférence, par l'extrémité libre du levier de transmission (132).

12. Cassette de nettoyage selon l'une des revendications 1 à 11, caractérisée en ce que dans le boîtier de cassette (102) est conformé un logement muni de contacts de raccordement (88) pour au moins une pile électrique (86).

13. Cassette de nettoyage selon l'une des revendications 1 à 12, caractérisée en ce que dans le boîtier de cas-sette sont prévues plusieurs cases séparées par des cloisons, la tête de nettoyage (22) étant placée dans une première case, tandis que le dispositif d'entraînement est logé dans une seconde case (36) contiguë à la première case (201); et que dans une cloison (14) séparant la première case (20) de la seconde case (36) est conformé un évidement (34) pour le passage du levier de transmission (32).

14. Cassette de nettoyage selon la revendication 12, caractérisée en ce que le dispositif d'entraînement (152, 150, 151, 132) est disposé dans une première case (120), tandis qu'une autre case (136) contient un dispositif de commande électronique (194); et que le logement pour des batteries (86) est de préférence conformé en compartiment de piles séparé (84, 184).

15. Cassette de nettoyage selon l'une des revendications 1 à 14, caractérisée en ce que dans ou sur au moins l'une des parois extérieures (6, 8, 106, 108, 112) du boîtier de cassette (2, 102) est disposé un commutateur électrique (64, 164, 164a) avec un organe d'actionnement (66, 166) dirigé vers l'extérieur et/ou que, en régard à la direction de défilement de la bande de l'appareil à cassette de bande magnétique, un commutateur (164a) est placé en amont et/ou en aval de la tête de nettoyage (122), et/ou que le galet de nettoyage (68) est fixé sur un axe (70) monté de manière à pouvoir se déplacer sensiblement parallèlement au fond (4) du boîtier et relié à l'organe de commande d'un commutateur électrique logé dans le boîtier de cassette (2).

16. Cassette de nettoyage selon l'une des revendications 7 à 15, caractérisée en ce que le galet de nettoyage (68) comprend un moyeu de galet (72) et une garniture annulaire (74) par exemple en une matière spongieuse ou en tissu pouvant être placée sur ledit moyeu.

17. Cassette de nettoyage selon la revendication 16, la surface de travail de la tête de nettoyage dirigée vers la tête de convertisseur présentant un logement pour la fixation d'une bande de revêtement par exemple en une matière spongieuse ou en tissu, caractérisée en ce que dans le boîtier de cassette (2) est conformée une case séparée destinée à recevoir respectivement au moins une bande de revêtement (30a) et une garniture annulaire (74a), la case séparée étant de préférence conformée pour recevoir au moins une garniture annulaire (74a) et un multiple entier de bandes de revêtement (30a).

18. Cassette de nettoyage selon l'une des revendications 6 à 16, caractérisée en ce que le commutateur-palpeur (62, 162) est disposé ou conçu de telle façon que le moteur d'entraînement (52, 152) s'arrête, après l'actionnement du commutateur-palpeur (62, 162), dans une position dans laquelle la tête de nettoyage (22,122) occupe une position médiane.

Fig. 1

Fig. 2